# NEW EUROPEAN PATENT SPECIFICATION

(11) **EP 0 885 557 B2**
(45) Date of publication and mention of the opposition decision: **17.11.2010**
(45) Mention of the grant of the patent: 18.08.2004
(21) Application number: 98202062.0
(22) Date of filing: 19.06.1998
(51) Int. Cl.: A01K 1/015

(54) **Composition which is absorbent and inhibitive of the formation of bad smells in animal litter, method for the preparation thereof and use in hygienic litter for cats**
Absorbierende Zusammensetzung die die Entwicklung von unangenehmen Gerüchen in Tierstreu verhindert, Verfahren zu deren Herstellung und Verwendung als Katzenstreu
Composition absorbante empêchant le développement des mauvaises odeurs dans les litières pour animaux, procédé pour sa préparation et son utilisation comme litière pour chats

(30) Priority: 20.06.1997 ES 9701360
(43) Date of publication of application: 23.12.1998
(73) Proprietor: TOLSA S.A., 28001 Madrid (ES)
(72) Inventor: Alvarez Berenglier, Antonio, 28660 Boadilla Del Monte (ES); Duch Martinez, Ignacio, 28032 Madrid (ES); Arias Moreno, Enrique, 28041 Madrid (ES); Holgado Pérez, José Luis, 05420 Avila (ES)
(74) Representative: Ungria Lopez, Javier

(56) References cited:
- EP-A- 0 247 946
- EP-A- 0 401 140
- EP-A- 0 410 576
- WO-A-90/07273
- WO-A-98/27261
- FR-A- 2 628 289
- NL-A- 7 212 897
- US-A- 3 921 581
- US-A- 4 085 704
- US-A- 4 641 605
- US-A- 4 840 792
- US-A- 5 018 482
- US-A- 5 154 594
- US-A- 5 189 987
- US-A- 5 267 531
- US-A- 5 395 585

## Description

The present invention fits in the technical field of absorbent hygienic litter for pets, particularly for cats, destined to retain urine and to collect excrements deposited by animals. More specifically, the invention refers to absorbent hygienic cat litter wherein the formation of bad smells that are specifically caused by the aging and decomposition of cat urine, is avoided.

The characteristics and composition of the present invention are especially designed to prevent the formation and development of bad smells, in the animal's tray as well as in its habitable surroundings, for example, inside the home. Said smells are basically formed during the bacterial decomposition of the amino acid felinine contained in cat urine, and during which foul-smelling volatile sulfurous molecules for the most part are formed. When the cat urine comes in contact with the hygienic litter it is rapidly absorbed and, by the combined effect of the carrier and of the active molecular complex, a synergic process is started and enhanced by means of which the composition reacts rapidly with the molecules responsible for the bad smell, preventing the activity and spreading thereof. On the other hand, the solid excrements that the animal deposits are rapidly coated and dried by the carrier, allowing the active molecular complex to also act to prevent the formation of bad smells by means of specific reactions with the responsible molecules. Separately, the carrier and molecular complex are capable of controlling the formation of bad smells but their activity and effectiveness are notably less with respect to the composition that is described in the present invention.

### PRIOR ART OF THE INVENTION

People who own cats put at their disposal trays that contain absorbent hygienic litter so that, satisfying their natural instinct, they can urinate and defecate without the need to go outside. Absorbent hygienic animal litters are therefore used to retain their residues, absorbing the urine and coating and drying the excrements, for the purpose of preventing, as much as possible, decomposition thereof and the consequent formation of bad smells, aside from keeping the litter clean. Consequently, litters have to have a sufficient capacity to absorb urine, a high capacity to dehydrate feces and they must reduce the formation of smells and minimize bacterial growth that accelerates the urine decomposition processes.

For this purpose, litters have to comply with a series of basic characteristics related to their composition, absorption power, apparent density, particle size, mechanical resistance and smell control, aside from being accepted by the animal. Acceptance of the litter is also fundamental in order to prevent changes of behavior that could alter the hygienic habits of the animal since many animals, among them cats, reject dirty and foul-smelling litters.

Nonetheless, very few products fully comply with the cited characteristics and none of them is capable of ensuring an effective control of bad smells during the conditions of use thereof.

For the most part, litters for small animals and, especially for cats, are obtained from mineral raw materials and basically clays, such as attapulgites, sepiolites, bentonites, marls, zeolites, illites, etc., while to a lesser degree, non-mineral products, such as wood or paper derivatives and plant derivatives, such as corn fiber, wheat, straw, rice husk, etc., are also used. At times, preparations made from gypsum, slate, pumice, building wastes, mixtures, etc. and synthetic minerals comprised calcium silicate, are also used.

It is well known that cats have certain peculiarities in their metabolism that make them unique among mammals. Some of them seem to have a big influence on the typical foul smell of cat urine. Hence, cats are capable of synthesizing and excreting in their urine various amino acids that have not been found in any other mammals. On the other hand, the lack in cats of certain amino acids and of certain enzymes involved in the metabolism of fatty acids and urea, makes the composition of cat urine so complex and different from that of any other animal. Cats produce the amino acid felinine and they excrete it quantitatively in urine. Felinine, which has never been detected in the urine of any other animal and which is odorless, is considered as the main compound responsible for the offensive bad smell of aged cat urine, since it is the precursor from whose bacterial decomposition most of the compounds responsible for bad smells are derived.

Cat urine recently excreted on a clean surface, maintained in the absence of oxygen and cold, does not develop any bad smell. On the contrary, if urine is deposited on an unclean material (floor, porous substrate, fabrics, carpet, etc.) it rapidly gives rise first of all to the onset of a typical and aggressive ammoniacal bad smell, that is formed in the biochemical degradation by common bacteria of urea - the main component of urine - and other nitrogenous compounds. This phenomenon is not specific of cat urine, since other mammals also excrete urea in their urine and the intensity of the ammoniacal smell decreases rapidly.

In cat urine, with the aging of the same, the ammoniacal smell progressively reduces and the characteristic bad cat smell caused by the bacterial degradation of the felinine, increases, thus causing a large amount of volatile sulfurous components and derivatives thereof, of an intense and peculiar bad smell, that can last for months.

There are numerous types of absorbent litters based on the mentioned raw materials with which an attempt has been made to avoid or at least reduce the formation of the bad smells coming from cat urine.

Now then, the existing litters with an agglomerating effect - normally comprised of bentonites or other mineral and plant materials with polymer additives - can be used with good results when eliminating residues, but do not satisfactorily resolve the formation of bad smells, typical of aged cat urine, since, although part of the material contaminated by the urine can be periodically removed with more or less ease, they are always wastes in the litter and it becomes saturated with the bad smell, which causes the owner of the cat to change the entire litter, even before it has been completely contaminated. Such litters are described for example in EP-A-0717928 and US-A-5180064.

Some litters of plant origin can contain natural substances that in some way temporarily cover up the bad smells, but they do not neutralize nor eliminate them; generally, and although the absorbing power thereof is high, such litters break up in contact with the urine, releasing it to the medium without its aging and decomposition then being able to be avoided. As a result, the offensive cat-like bad smell is produced and the fermentation of the plant material take place.

On the other hand, some synthetic mineral litters, with a high alkalinity, and other mineral litters treated thermally at a high temperature, only manage to avoid the natural presence of microorganisms in their structure, but they are not capable of avoiding the contamination thereof nor are they able to counteract the bacterial activity of the urine on the metabolites that it contains and, therefore, they cannot prevent the onset of the bad cat-like smell since they only act specifically on ammoniacal smells.
Neither have conventional chemical treatments on different litters with agents such as metal salts, essential oils, organic acids, bactericides, etc. led to an overall effectiveness on the control of bacteria in cat litter, nor a specific effectiveness on the components responsible for the bad smell. On the other hand, perfumed litters only manage to temporarily cover up the bad smell caused by the aged cat urine, acting on the human pituitary gland, therefore, its effectiveness is not satisfactory.

European patent application EP-A-0247946 describes a process and a composition to neutralize the unpleasant smells of cat excretions, wherein a deodorizing active agent is sprayed on the surface of the cat litters, selecting said agent from among aliphatic alcohols, aldehydes, aliphatic ketones, aliphatic esters, aromatic lactones, phenols, aromatic ethers, amine type nitrogenous compounds and aromatic amines, or mixtures and solutions thereof. These compounds, applied by spraying on the cat litters, such as for example, litters comprised of attapulgite, achieve an effect of partial and temporary inhibition of the formation of the offensive cat-like smell, but they have the limitation that their effect is variable in terms of when they are applied, the amount of product applied and the low permanence in time. Hence, if the composition is applied in a preventive manner and the cat deposits the source of the smell late or does not do so, the product will be wasted.

European patent application EP-A-0401140 describes deodorizing compositions that contain at least two aldehydes, namely, a first aldehyde selected from among non-terpene and acyclic aliphatic aldehydes, non-terpene alicyclic aldehydes, terpene aldehydes, aliphatic aldehydes substitutes by an aromatic group, bifunctional aldehydes, and a second aldehyde selected from among aldehydes that have alpha insaturation of the aldehyde function conjugated with an aromatic cycle and aldehydes wherein the function is carried by an aromatic cycle. The compositions have a conventional form of aerosols, solutions, creams, powders and solid supports impregnated for their use and external dosage on litters. It has been possible to verify that, applying the methodology of spraying these compositions on cat litters contaminated with cat urine, adequately achieves substantial inhibition of the offensive smell of aged urine, but with significant inconveniences derived from its scarce practicability and difficult dosage, for which reason the method does not offer good results.

Application on cat litters by means of spraying the compositions described in EP-A-0247946 and EP-A-0401140 has, aside from a merely olfactory action against bad smells, a specific activity on the molecules responsible for the bad smell identified in cat urine, as well as on amines and ammonia, in experimental and laboratory conditions. However, they have the clear limitation of having to be applied externally by spraying on the source of the bad smell or before said smell appears. This proves to be hardly practical and very awkward since the caretaker has to be constantly concerned about the onset of the bad smell, not very ethological since the external applications may bother the animals, with an effect that is not long-lasting since the losses by evaporation will be considerable and rather expensive as to the adjustment of the strictly necessary dose will be very difficult.
Common litters, irrespective of their composition, do not prove to be totally effective in the elimination of bad smells, since their capacity is limited and within a few days it is necessary to completely replace them even when their liquid absorbing capacity has not been used up. The different physical and chemical treatments to which they are subjected or the forms of periodic maintenance by selective removal, do not definitively avoid the problem of bad smell either.
On the other hand, organic substances such as the described ones can show an effective specific and deodorizing action on the compounds responsible for the bad smell, but their presentation and use do not allow them to be fully effective and besides they have practical and economic inconveniences, as to the control of the optimum dose and the moment of application turns out to be difficult.
US-4,085,704 discloses a litter for animals which releases an odor control agent comprising an absorbent material - a layish, porous, granular and liquid absorbent mineral substrate selected among clays, vermiculites, zeolites, molecular sieves, opalites, silica materials, fire brick, diatomaceous earth and fuller's earth - admixed with a vehicle, - a highly porous chemically inert silica gel or mullite - which is impregnated with an odor control agent - a fragrance or perfume masking the bad smells.

### OBJECT OF THE INVENTION

The object of the present invention is to overcome the inconveniences described in the prior art, providing an completely effective, hygienic, economic and easy to use litter that combines, in a single product, the advantages of certain cat litters comprised of conventional minerals and clays with the inhibitive effects of the formation of bad smells of the molecular complex, especially of the bad smells inherent to aged cat urine.

The inconveniences related to the choice of the moment of application, the animal's comfort, losses of the inhibitive effect and savings, described in the cited patents, remain substantially improved and solved in the new invention.

### DESCRIPTION OF THE INVENTION

The above mentioned object is achieved by means of an absorbent litter that comprises a porous, absorbent, granular, solid, clayish mineral carrier, and at least one active molecular complex, selected from among the compounds described in European patent applications EP-A-0247946 and EP-A-0401140, which permits the molecular complex and the carrier to act in a combined and synergic manner in the elimination of the bad smell coming from the urine in decomposition and the solid excrements.

The present invention very advantageously overcomes the inconveniences described, respectively, for litters, treatments and active substances, and it has been surprisingly found that the deodorizing activity of the composition prepared in the described manner, is greater than that of any previously known composition or system, and besides application and use thereof are very simple, economic and industrially feasible.

The physicochemical properties of the carrier are of great importance for the achievement of a high activity of the composition. It has been found that a high chemical inertia that minimizes undesirable reactions in the molecular complex and that allows reversible interactions, is necessary. Mineral carriers with small particle sizes (typically between 0.1 and 6 mm), a high specific surface (typically >50 m²/g) and a high porosity (typically >0.1 cm³/g) are, unexpectedly and surprisingly, advantageous inasmuch as they enhance absorption and homogeneous distribution of the complex and they facilitate its accessibility and inhibition reaction with the molecules responsible for the bad smell that penetrate in the structure of the carrier.
The mineral carrier is sepiolite.

The inclusion of a molecular complex selected from among one or more compounds known from European patent applications EP-A-0247946 and EP-A-0401140, about the mineral carrier with the cited characteristics and properties, permit "activation" of the molecular complex in the sense that, upon the molecular complex being included in more than 50% of its total, inside at least one substantial part of its microstructure, a gradual and regulated emission to the reaction medium with urine, as well as, in view of the fact that the urine remains at least partially absorbed inside the granules, a close contact between the activated molecular complex and the urine inside the same, which especially favors the inhibitive effect of said molecular complexes by reaction with the molecules contained in the urine responsible for the bad smell.

Preferably, the mineral carrier comprises granules with particle sizes between 0.25 and 4 mm and more specifically between 0.6 and 3.35 mm, with apparent densities that vary between 400 and 1000 g/l.

In the invention, the mineral carrier is sepiolite, a natural clay belonging to the group of phyllosilicates known as sepiolite-palygorskite and which chemically corresponds to a hydrated magnesium silicate.

The special structure of the sepiolite particles is responsible for its basic properties and for its especially adequate function as to the interaction with the molecular complex and in the control of the bad smell. As a result of its so particular crystalline reticulum, the shape of the sepiolite particles, which instead of being laminate as in most of the phyllosilicates, is acicular, with a multitude of channels directed parallel to the longitudinal axis of the particle. In the structure of the sepiolite there are active absorption centers, such as oxygen atoms, water molecules in the channels coordinated with ions and capable of forming hydrogen bridges, and groups of the external surface that may interact with molecules and establish bonds with organic species.

The non-swellable nature of sepiolite due to its rigid crystalline structure makes the particles keep together, maintaining their mechanical resistance even when they are saturated with liquids. In their natural state the sepiolite particles form large agglomerates with a very porous structure.

The absorbent properties of sepiolite are due to a great degree to its high specific surface, higher than 200 m²/g due to the presence of channels and to the existence of active centers. Absorption implies the contact of a free liquid phase with a rigid and durable solid phase with the capacity of taking in and storing the liquid. The porous structure (> 0.25 cm³/g) is especially advantageous to ensure a high absorption capacity. The size of the particles, their distribution, the micropores, the capillary structure and the chemical surface play a very important role in the absorption mechanisms. The volume of liquid that sepiolite is capable of absorbing depends on different factors such as the composition of the liquid, density, viscosity, surface tension, and of course, the nature and polarity thereof, aside from the size of the sepiolite granules. Nonetheless, sepiolite in general displays high absorption values of liquids and solvents of different natures, with very rapid absorption kinetics.

Absorption of sepiolite is very high due to the very fine habit of its particles that provides an highly accessible outside surface, however, it also depends on the capacity of the absorbed molecules to penetrate into the channels, which is influenced by the size, shape and polarity thereof.
Sepiolite also displays a good capacity of interaction and absorption of microorganisms, whereby it delays the activity of bacteria, always present in the medium and in animal wastes, which act directly on the decomposition of urine.

Its extraordinary physical and chemical properties make it especially ideal as absorbent cat litter. Besides, it has a granular aspect without dust, and it has a light cream color, very attractive to the animal. Its round shaped particles are hard enough to allow it to keep its integral aspect when it is saturated with liquid. The studied distribution of sepiolite granule sizes allows not only the absorption of urine and bad smells to be maximized, but also solid excrements to be coated, drying them out and retaining the volatile components that also produce bad smells.

Upon combining the advantageous qualities of sepiolite with those of the above mentioned molecular complexes, a synergic effect is surprisingly and unexpectedly produced, since upon the molecular complex remaining absorbed and distributed in the microchannels and micropores inside the sepiolite granules, the activity thereof in contact with urine is progressive and besides the complex remains protected against evaporation.

The high absorption capacity of sepiolite makes the urine, before its decomposition, remain absorbed in its structure in such a way that the molecular complex can exert its inhibiting effect on the entire surface of the particles. The result of the interaction of sepiolite with the molecular complex is a total effectiveness of inhibiting and neutralizing the bad smell, since the molecular complex is gradually released and its activity is enhanced and increased upon being distributed in the most reactive spots of the carrier more accessible to the molecules upon which it has to act. In short, the structure and high specific surface of sepiolite stabilizes the molecular complex in time, making it more effective and durable, increasing its reactive surface, making it more available for neutralization reactions and it controls and regulates the release thereof to the medium, making it more effective and economical.

The molecular complex is selected from among compounds described in European patent applications EP-A-0247946 and EP-A-0401140, namely, among the group comprised of aromatic amines, aliphatic ketones, aliphatic esters, aromatic lactones, phenols, aromatic ethers and amine type nitrogenous compounds, known in themselves and normally used in perfumery due to their odoriferous properties and that also have a vapor tension lower than or equal to 4 Pa at 25° C, and of aldehydes, or mixtures thereof.

The amine type nitrogenous compound may be selected from between indole and its compounds of reaction with hydroxycitronella called indolene and the aliphatic nitriles such as tridicene-2-nitrile, or mixtures thereof.

The aromatic ether may be selected from among diphenyl oxide, methylated and ethylated naphthol ethers and galaxolide or mixtures thereof.

The phenol may be selected from between eugenol and isoeugenol, or mixtures thereof.

The aromatic lactone may be selected from between coumarin, dihydrocoumarine and aliphatic lactones such as gamma-decalactone, dodecalactone and undecalactone or mixtures thereof.

The aliphatic ester may be selected advantageously from among C₈ to C₁₅, such as dihydro-methyl jasmonate, methyl jasmonate, methyl cyanamate and ethyl methyl phenylglycidate and aromatic esters such as methyl anthranilate, methyl N-methylanthranilate, methyl N-methylanthranilate, p-cresyl phenyl acetate and amyl salicylate or mixtures thereof.

The aliphatic ketone may be selected from among C₁₃ and C₁₄ as alpha- and beta- ionones and damaskones, as well as aliphatic and aromatic ketones with a musk-like smell of up to 18 carbon atoms, or mixtures thereof.

The aliphatic alcohol may be selected from among C₁₀ to C₁₂ aliphatic alcohols such as decanol, cironellol and geraniol or mixtures thereof.

The aldehyde may be selected from among C₁₀ to C₁₃ aldehydes or else aliphatic aldehydes such as normal or branched dodecanal, or myrac aldehyde, or else aromatic aldehydes such as cyclamen, helionol, heliotropine, paramethylphenylacetaldehyde, vanilline and derivatives thereof, aliphatic acyclic and non-terpene aldehydes, alicyclic non-terpene aldehydes, terpene aldehydes aliphatic aldehydes substituted by an aromatic group, bifunctional aldehydes, aldehydes that have alpha insaturation of the aldehyde function conjugated with an aromatic cycle and aldehydes in which the function is carried by an aromatic cycle or mixtures thereof.

In an embodiment of the invention, the molecular complex comprises at least two aldehydes, namely, a first aldehyde selected from among aliphatic acyclic and non-terpene aldehydes, alicyclic non-terpene aldehydes, terpene aldehydes, aliphatic aldehydes replaced by an aromatic group, bifunctional aldehydes, and a second aldehyde selected from among aldehydes that have alpha insaturation of the aldehyde function conjugated with an aromatic cycle and aldehydes in which the function is carried by an aromatic cycle.
According to this embodiment, the first aldehyde may be selected from among helional and citronella and the second aldehyde between citral and jasmonal, combining for example helional with citral or jasmonal or citral with jasmonal, in proportions of 80/20 to 20/80, and especially 50/50.

The molecular complex may be liquid or solid. When it is liquid, it has an aqueous or lipid nature. Besides, the molecular complex may be mixed, in a way that is known in itself, with additives such as bactericidal, aromatizing, dispersing, volatizing agents, emulgents, solvents, etc.
In order to prepare the granular composition according to the present invention, one may proceed in the following manner:

First, the molecular complex is mixed with water. When the molecular complex is like a lipid liquid it disperses easily in water by means of mechanical stirring until an stable oil/water emulsion is obtained, while when the molecular complex is like an aqueous liquid, it mixes with water until it totally dissolves. Typically, from 1 to 10 parts by weight of the molecular complex are mixed with 99 to 90 parts of water.

The emulsion or resulting solution is pulverized, upon the mineral carrier, in a proportion of for example 1 part by weight of emulsion or solution per 2 - 6 parts, preferably 4 parts, of carrier, where the molecular complex penetrates inside the porous structure of the granules of the mineral carrier. Afterwards, the mixture is homogenized in a rotary drum.

When the mineral carrier may be separated according to fractions according to the sizes of its particles, in one preferred embodiment of the invention, the emulsion or solution is pulverized in the fine fraction of the carrier and the mixture is homogenized in the above cited conditions. Then, the fine fraction in which the molecular complex has been integrated is dry mixed with a thicker fraction of the mineral carrier.

Although the proportion between the fine and thick fractions that ensures good behavior of the composition may vary from a ratio by weight of 1:2 up to a ratio of 1:8, it has been found, that in order to obtain the maximum effectiveness in the inhibition of bad smell, there is an optimum mixture proportion between the fine fraction of the carrier, in which the molecular complex has been impregnated, and the thick fraction. More specifically, it has been found that the optimum ratio is typically located in a ratio of 1:4 by weight, to obtain a final homogeneous and fluid product with maximum effectiveness and activity, in which the molecular complex is found at a concentration between 0.02 and 2% by weight. The dry mixture is conveniently made in such a way that the contact between the fine and thick fractions of the mineral carrier produces a certain controlled transference of the active molecular complex towards the thick fraction, for the purpose of optimizing the inhibition of bad smells.

By means of the compositions of the present invention, the useful life of litter is considerably lengthened without the formation of bad smells, improving hygiene, which also leads to a material saving for the pet owner, and to a reduction of possible reactions of rejection by the pet, which could lead to the pet excreting in undesired places.

Commonly, for the use of the compositions of the present invention in cat litters the bottom of an adequately sized tray is covered with a layer with an average thickness of 0.5 to 6 cm. of the composition, and the usual cleaning operations are carried out.

Although the present invention is especially advantageous for cat litter, its use in litter for other small animals, such as hamsters, Guinea pigs, rabbits, etc. is also totally feasible and satisfactory.

### BRIEF DESCRIPTION OF THE FIGURES

After the present specification some figures which illustrate the results of different comparative tests, conducted to demonstrate the effectiveness of the invention according to different practical embodiments are added, the figures being:
Figure 1 shows a graph representative of the big difference of deodorizing capacity between conventional sepiolite and a composition comprised of sepiolite prepared according to the present invention.
Figure 2 shows a graph with the results of some comparative tests of neutralization of the bad smell that were carried out using conventional sepiolite, perfumed sepiolite and a composition comprised of sepiolite prepared according to the present invention.
Figure 3 shows a graph with the results of some comparative tests of the neutralization of the bad smell that were carried out using plant, synthetic and bentonite litters and a composition comprised of sepiolite prepared according to the present invention.
Figure 4 shows a graph with the results of some comparative tests of neutralization of the bad smell that were carried out using molecular complex applied externally to sepiolite and a composition comprised of sepiolite prepared according to the present invention.
Figure 5 shows a graph with the results of some comparative tests of the neutralization of the bad smell that were carried out using different substrates with external applications of molecular complex and the same made according to the invention, in terms of the specific surface thereof.

### EMBODIMENTS OF THE INVENTION

The present invention is additionally illustrated based on the embodiments that are set forth hereinafter.
**Example 1:** In order to prepare 10 kg. of a litter comprised of an absorbent composition according to the invention (identified as SEPIOLITE SUPER PLUS" in the drawings), 10 g. of a molecular complex (TOLCAT'96, a composition manufactured by ROBERTET, S.A., Grasse, France, according to its European patent EP-0401140) were dispersed under mechanical stirring in 0.5 1. of deionized water. The formed emulsion is poured on 1 kg. of a fine sepiolite fraction (manufactured by TOLSA, S.A., Madrid, Spain) comprised between 0.6 and 1.2 mm and they were mixed and homogenized for several minutes until it is seen that all the granules are wet. The excess water was removed from this mixture by gently drying at 40° C until the mixture became fluid. In order to obtain the final product, 1 kg. of the previous preparation was mixed thoroughly with 9 kg. of conventional sepiolite, which means a ratio of 1:6 by weight between the fine and thick fractions of the carrier.
**Example 2:**In order to prepare 1 M.T. of the new composition (identified as SP-B in the drawings) 1000 g of another molecular complex (ERTECAT, a composition also manufactured by ROBERTET, S.A., Grasse, France, according to its European patent EP-0401140) were dispersed under mechanical stirring in 50 1. of water. The spontaneously formed emulsion was sprayed on 200 kg. of a fine sepiolite fraction comprised between 0.6 and 1.2 mm and it was mixed and homogenized in a rotary drum for 15 minutes. The obtained mixture was fluid enough so that a drying step was not required. In order to obtain the final product, five successive loads each one containing 40 kg. of fine sepiolite fraction impregnated with the molecular complex and 160 kg. of thick sepiolite fraction comprised between 1.2 and 3.4 mm were mixed in the same drum, which means a ratio of 1:4 by weight. Extraction tests with solvents of the molecular complex, carried out on samples of the thick fraction of the final product, revealed a certain transference thereof from the fine fraction, very interesting for the deodorizing behavior of the composition.
**Example** 3: In a room with an approximate size of 5.7 x 4.2 x 2.7 m. an adult cat conveniently fed with special dry cat feed was kept during the length of the experiment.
During a first stage of the test, a hygienic 45.5 × 33 × 13 cm tray which was filled with 2.5 kg. of conventional sepiolite litter (manufactured by TOLSA, S.A., Madrid, Spain), was put at the animal's disposal. The characteristics of the litter had the following typical values:

| | |
|---|---|
| Mineralogy Sepiolite | 80%, other clays 20% |
| Humidity | 10% |
| Apparent density | 610 g/l |
| Water absorption | 95% |
| Specific surface | 240 m²/g |

Granulometric distribution 0% >4.75 mm and <5% < 0.6 mm

During a second stage of the test, a tray of the same size, which was filled this time with 2.5 Kg. of litter (SEPIOLITE SUPER PLUS) prepared according to example 1 was put at the animal's disposal.
In both stages of the test three people trained especially for the purpose, evaluated every day the nature and intensity of the environmental bad smell, with a scale of 1 to 4, respectively, in terms of whether this was a slight, obvious, intense or aggressive cat urine smell, or zero value (0) if no unpleasant smell was perceived. After the evaluations the solid wastes of the animals were always removed.

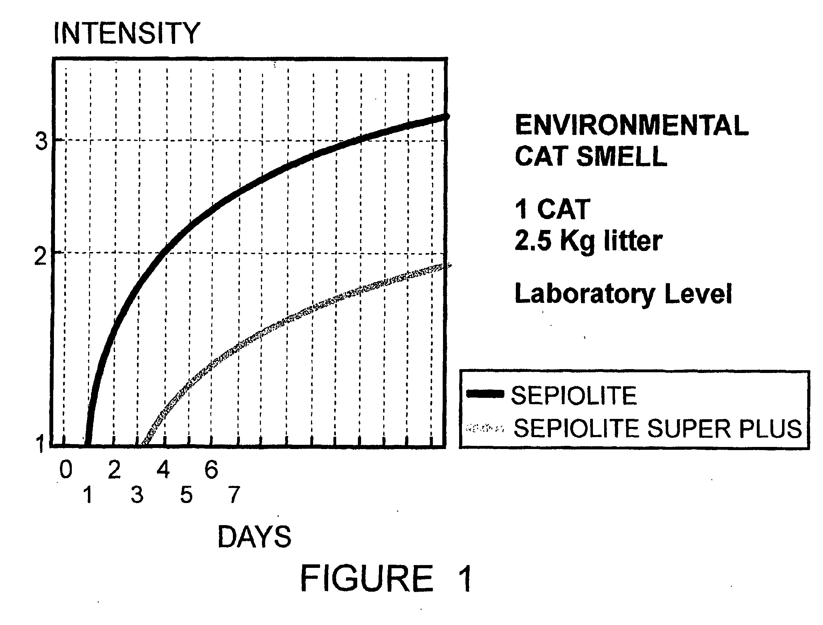

As it can be seen in the graph of figure 1, wherein the results of the experiment adjusted to a curve are shown, the evolution of the bad smell produced was very different in both stages. In the first one, with conventional sepiolite, the smell was already perceived on the first day of the test and on the fourth day its intensity (2) already recommended the total replacement of the contents of the tray. In the second stage, with the new composition SP-B, the first indication of bad smell took place after day three, but the most outstanding fact is that never during the useful life of the litter before the saturation thereof, was the level of intensity that is considered to be bothersome was exceeded, therefore, it was not necessary to replace the material until more than 2 weeks went by, with the subsequent saving and improvement of the hygienic conditions.
**Example 4:**In a especially designed installation equipped to keep cats and to carry out behavior experiments, an experiment was carried out with eight young animals, 4 males and 4 females, for the purpose of comparing the deodorizing capacity of three types of litters comprised of sepiolite. The olfactory evaluations and the cleaning of the litters were carried out as in the above example. 4 rooms of the same size, 2.5 x 2.5 x 1.4, with unforced ventilation were used, in which two animals of the same sex were kept for seven days in each one. Each treatment was applied to 2 males and to 2 females and the average of the evaluations was calculated.

The first part of the experiment consisted of comparing conventional sepiolite with the litter prepared industrially according to the new composition (SP-B) prepared according to example 2.

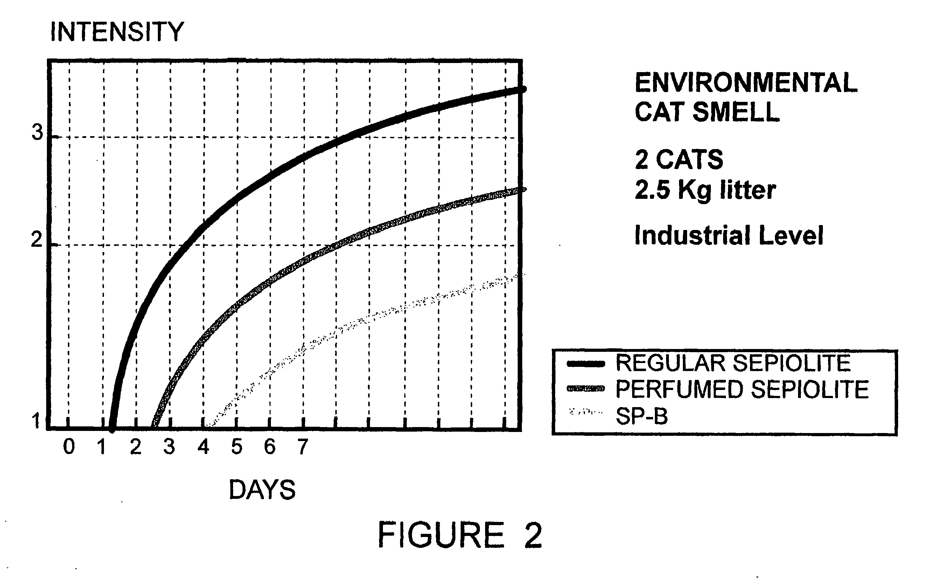

The second part of the experiment consisted of comparing conventional perfumed sepiolite with the litter prepared industrially according to the new composition (SP-B-B) just as it has been described.
As one can see in the graph of figure 2, wherein the results of the three products (for SP-B the average of the two tests is given) are represented, the evolution of the bad smell produced was different. With conventional sepiolite the smell was perceived already on the first day of the test and before the fourth day its intensity (2) already made it advisable to totally replace the contents of the tray. With conventional perfumed sepiolite, the onset of the bad smell was delayed to 2.5 days, but after one week it was necessary to completely replace it. With the new composition SP-B, the first indication of bad smell took place after the fourth day, but the most outstanding thing is that it never, during the useful life of the litter before its saturation, exceeded the intensity level that is considered bothersome and it was not necessary to replace the material until more than 2 weeks went by, with the subsequent saving and improvement of hygienic conditions.
**Example 5:**In the same installation and conditions as the previous example three litters on the market, supposedly with a deodorizing effect based on their intrinsic properties were tested strictly following the way of use recommended by the manufacturer. Each test was compared, in the same experimental design conditions, with the litter prepared industrially according to example 2 (SP-B), whose data are the average of the three tests carried out.

The typical characteristics of the three litters of the market are:

| | SYNTHETIC | BENTONITE | PLANT |
|---|---|---|---|
| Main component | Tobermorite 100% | Smectite 80% | Wood 100% |
| Humidity (%) | 6.5 | 8 | 8.6 |
| Apparent density (g/l) | 473 | 890 | 612 |
| Water absorption (%) | 82 | 200 | 266 |
| Specific surface (m²/g) | 50 | Very low | |
| Particle size ASTM) | 6/30 | 6/30 > 90% > 4.75 mm | |

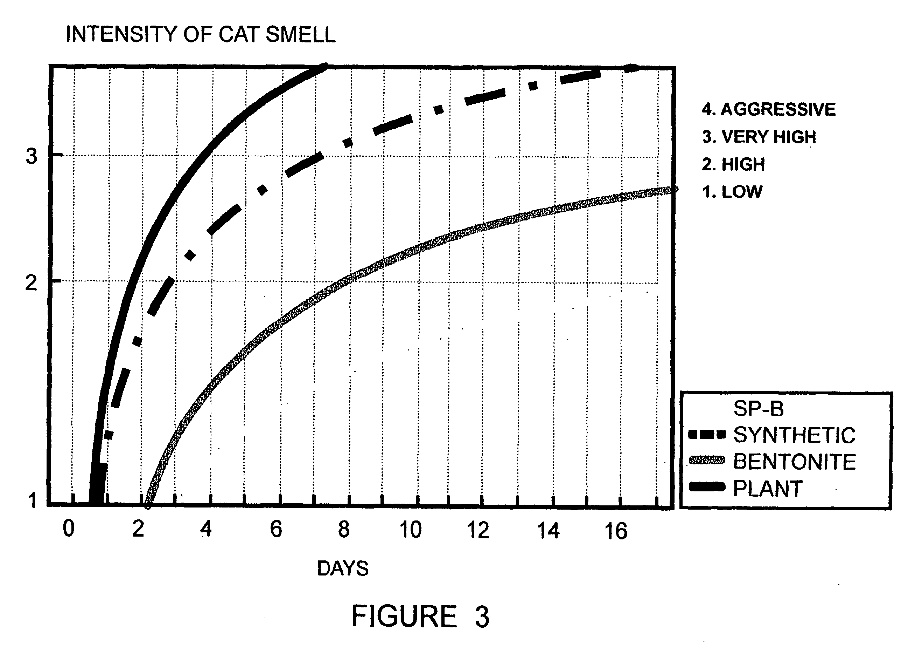

In figure 3, the corresponding curves of evolution of the intensity of the bad smell over time, for each one of the materials, are represented.
It is observed how the plant litter already on the first day gave off a slightly unpleasant urine smell (evaluation 1), likewise perceiving its characteristic woodlike smell. On the second day the product gave off an unpleasant smell with a high intensity (2) and it was very deteriorated physically and, despite the fact that the material that broke up was removed daily and replaced with clean material, before the fourth day (evaluation 3) the animals refused to use it and began to urinate outside the tray.

Likewise, the synthetic litter gave off a slight bad smell that was perceived before one day had gone by, aside from a peculiar typical smell of the material itself. As of day three it was considered that the material was no longer usable in hygienic conditions.
Bentonite had initially better deodorizing behavior than the two previous, plant and synthetic, products, and besides, upon forming agglomerates in contact with the urine, part of the source that caused the bad smell was removed daily and was replaced by another material. Nonetheless, and despite the daily elimination of the source of bad smell, after 7 to 8 days had gone a accumulation of a bad smell with a high intensity was perceived, it being necessary to complete replace the material.

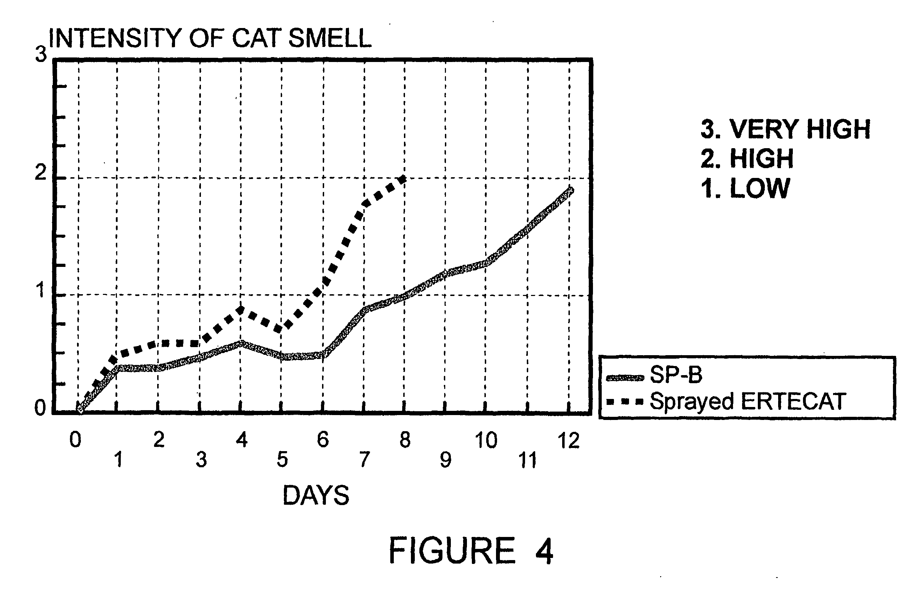

With the new composition SP-B, prepared according to example 2, the first indication of bad smell was perceived on day three, but it took more than 16 days to give off a bothersome smell, therefore its duration, without the need of periodic replacements and in hygienic conditions that prevent animals from ever rejecting the litter, was more than twice that of the best product tested.
**Example 6:** In two rooms with a volume of approximately 19m³, 16 adult cats were put in each room, dividing them two by two into independent cages in which a tray with 2 kg. of litter was placed, in order to proceed with a comparative test between a sepiolite prepared according to the procedure described in example 2 (SP-B) and a sepiolite of the same quality wherein the molecular complex was added thereto externally by manual spraying (identified as Sprayed ERTECAT in fig. 4), at the rate of four daily sprayings each one of about 0.08 g., spreading the sprayed product homogeneously around the tray. Said operation was carried out at the end of each testing day and after having carried out the cleaning operations and the corresponding olfactory evaluations. Daily, approximately at the same time every day, four people carried out the corresponding olfactory reading of the environment in reach room, subjectively and personally, avoiding comments and giving a score of zero (0) when there was no smell, one (1) when there was a slight smell, two (2) when there was quite a smell (and it would be necessary to replace the product) and three (3) when there was a real aged urine smell. The results obtained in the evaluation of intensity of the bad smell are those that appear in figure 4, and they clearly show the shorter duration and deodorizing activity of the litter wherein the molecular complex was sprayed externally. After eight days had gone by, Sprayed ERTECAT would have to be replaced, having consumed 2.56 g of molecular complex (0.32 g/day), whereas SP-B, prepared according to example 2, used up its deodorizing capacity on day 12, having consumed 2 g of molecular complex (0.16 g/day) and in better hygienic conditions.
**Example 7**: In 5 glass 200 ml. jars, 100 g. of 5 granules of sepiolite, attapulgite, bentonite, gypsum and sand, respectively, without any type of treatment and with an ASTM particle size 6/30 were put. In another 5 identical jars, 100 g. of sample of the same granules, but made according to the procedure described in example 2 in accordance with the invention, that is to say, carrying out an integral impregnation of each carrier with the TOLCAT-96 molecular complex (INTEGRAL IMPREGNATION), were likewise put. In each one of the 10 jars, and with the help of a pipette, 6 ml. of cat urine that had been unfrozen for 24 hours and that began to give off its characteristic bad smell were dosed. Both manual external spraying of about 0.1 g of pure undissolved TOLCAT-96 (EXTERNAL SPRAYING) were immediately carried out on the surface of the granules contained in the first 5 jars, then gentle stirring was carried out. As of this moment, and every 0.5 hours, an olfactory evaluation of the contents of each jar was carried out for the purpose of determining the time that goes by, for each product and for each way of adding the molecular complex, before the characteristic bad smell of aged urine is perceived.

Given that it is considered that the specific surface and the structure of the materials has a decisive importance on regulating the activity of the molecular complex, the time of the onset of the bad smell (h, left scale) in contrast to the specific surface of each material (m²/g, right scale).

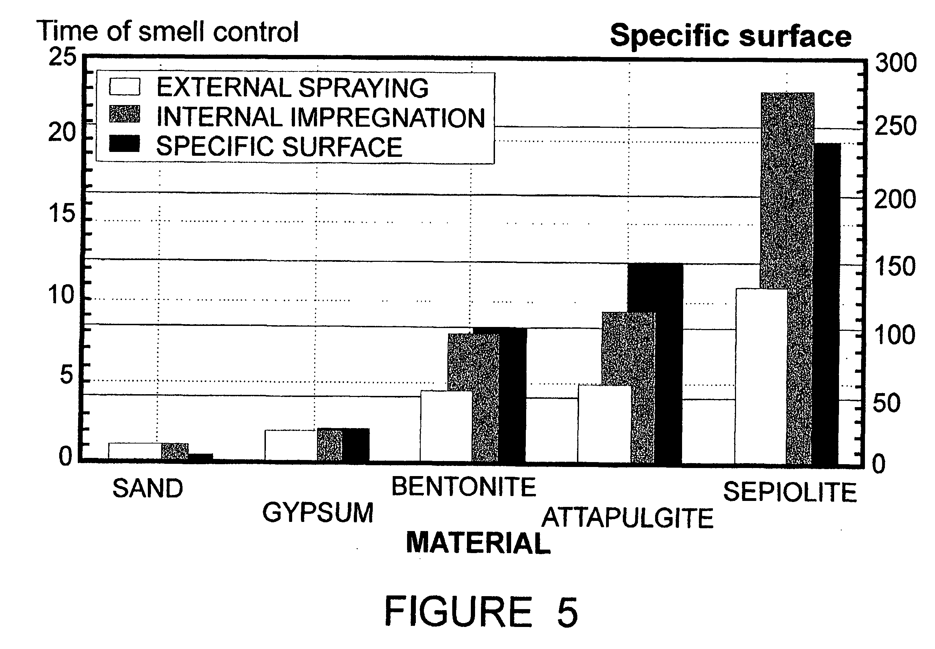

As it can be seen in figure 5, the maximum effective control time of the bad smell was produced with the substrate with the largest specific surface. As the surface reduced, the time of smell control was progressively lower, being very short for the materials with a scarce specific surface. It can also be clearly seen how the treatment of the mineral substrate with the molecular complex was much more effective in inhibiting the bad smell when it was done by impregnation (INTEGRAL IMPREGNATION, gray bars) in accordance with what has been described in the invention, instead of by manual external spraying (EXTERNAL SPRAYING, white bars), where the times of smell control were reduced a bit more than half when the specific surface was high, and somewhat less than half or with no appreciable reduction, when the specific surface is low, showing the importance of the regulatory action of the carrier based on its physical properties.

## Claims

1. Composition which is absorbent and inhibitive of the formation of bad smells in animal litter that comprises a deodorizing molecular complex and a granular carrier
**characterized in that**
the molecular complex is at least a compound with inhibitive properties of the formation of bad smells coming from the bacterial degradation of felinine;
the carrier is sepiolite, with a porosity higher than 0.1 cm³/g and a specific surface larger than 50 m²/g;
the molecular complex is absorbed inside the granules of the carrier.

2. Composition according to claim 1, **characterized in that** the molecular complex is present in the composition in a concentration of 0.02 to 2% of the total weight of the composition.

3. Composition according to claim 1 or 2, **characterized in that** the molecular complex contains at least one compound selected from among the group of inhibitors of bad smells coming from the bacterial degradation of felinine, which comprises at least one compound selected from among aromatic amines, aliphatic ketones, aliphatic esters, aromatic lactones, phenols, aromatic ethers and amine type nitrogenous compounds, with a vapor tension less than or equal to 4 Pa at 25° C, and from aldehydes or mixtures thereof.

4. Composition according to claim 3, **characterized in that** it contains at least one amine type nitrogenous compound selected from among indole and compounds of reaction with hydroxycitronella called indolene, aliphatic nitriles.

5. Composition according to claim 4, **characterized in that** the nitrogenous compound is tridicene-2-nitrile.

6. Composition according to claim 3, characterized n that it contains at least one aromatic ether selected from among diphenyl oxide, methylated and ethylated naphthol ethers and galaxolide.

7. Composition according to claim 3, **characterized in that** it contains at least one phenol selected from among eugenol and isoeugenol.

8. Composition according to claim 3, **characterized in that** it contains at least one aromatic lactone selected between coumarin and dihydrocoumarin.

9. Composition according to claim 3, **characterized in that** it contains at least one aliphatic lactone selected from among gamma-decalactone, dodecalactone and undecalactone.

10. Composition according to claim 3, **characterized in that** it contains at least one aliphatic ester selected from C₈ to C₁₅ esters.

11. Composition according to claim 10, **characterized in that** the aliphatic ester is selected from among the group comprised of methyl dihydro-jasmonate, methyl jasmonate, methyl cyanamate and ethyl methylphenylglycidate or mixtures thereof.

12. Composition according to claim 10, **characterized in that** the aliphatic ester is selected from among aromatic esters.

13. Composition according to claim 12, **characterized in that** the aromatic ester is selected from among the group comprised of methyl anthranilate, methyl N-methylanthranilate, methyl N-methylanthranilate, p-cresyl phenyl acetate and amyl salicylate.

14. Composition according to claim 3, **characterized in that** it contains at least one C₁₃-C₁₄ ketone.

15. Composition according to claim 14, **characterized in that** the C₁₃-C₁₄ ketone is selected from the group comprised of alpha- and beta- ionones and damaskones.

16. Composition according to claim 3, **characterized in that** it contains at least one ketone selected from among the group comprised of aliphatic and aromatic ketones with a musk-like smell of up to 18 carbon atoms, or mixtures thereof.

17. Composition according to claim 3, **characterized in that** it contains at least one aliphatic C₁₀ to C₁₂ alcohol.

18. Composition according to claim 17, **characterized in that** the aliphatic alcohol is selected from among the group comprised of decanol, citronellol and geraniol.

19. Composition according to claim 3, **characterized in that** it contains at least one C₁₀ to C₁₃ aldehyde.

20. Composition according to claim 3, **characterized in that** it contains at least one aliphatic aldehyde.

21. Composition according to claim 20, **characterized in that** the aliphatic aldehyde is selected from among the group comprised of normal or branched dodecanal and myrac aldehyde.

22. Composition according to claim 3, **characterized in that** it contains at least one aromatic aldehyde.

23. Composition according to claim 22, **characterized in that** the aromatic aldehyde is selected from among the group comprised of cyclamen aldehyde, helional, heliotropine, paramethylphenylacetaldehyde, vanillin and derivatives thereof.

24. Composition according to claim 3, **characterized in that** it contains a first aldehyde selected from among the group comprised of aliphatic, acyclic and non-terpene aldehydes, alicyclic non-terpene aldehydes, terpene aldehydes, aliphatic aldehydes substituted by an aromatic group, bifunctional aldehydes and a second aldehyde selected from among the group comprised of aldehydes that have alpha insaturation of the aldehyde function conjugated with an aromatic cycle and aldehydes wherein the function is carried by an aromatic cycle.

25. Composition according to claim 24, **characterized in that** the first aldehyde is selected from among helional and citronella.

26. Composition according to claim 24, **characterized in that** the second aldehyde is selected between citral and jasmonal.

27. Composition according to claim 24, **characterized in that** the first aldehyde is helional and the second aldehyde is citral.

28. Composition according to claim 24, characterized n that the first aldehyde is helional and the second aldehyde is jasmonal.

29. Composition according to claim 24, **characterized in that** the first aldehyde is citral and the second aldehyde is jasmonal.

30. Composition according to any of the claims 24 or 27-29, **characterized in that** the ratio between the first aldehyde and the second aldehyde is 20:80 up to 80:20 by weight.

31. Composition according to claim 30, **characterized in that** the ratio between the first aldehyde and the second aldehyde is 50:50 by weight.

32. Composition according to any of the claims 1, 4, **characterized in that** the mineral carrier comprises granules of a particle size between 0.1 and 6 mm.

33. Composition according to claim 32, **characterized in that** the particle size is from 0.6 to 3.35 mm.

34. Composition according to claim 32, **characterized in that** the sepiolite has a granulometric distribution between 6 and 60 mesh ASTM and an apparent density between 400 and 1000 kg/m³.

35. Composition according to any of claims 1-3, **characterized in that** the molecular complex is essentially integrated in a fine fraction of the mineral carrier.

36. Composition according to any of the claims 1, 4, **characterized in that** the mineral carrier has a specific surface larger than 100 m²/g.

37. Composition according to claim 36, **characterized in that** the mineral carrier has a specific surface larger than 200 m²/g.

38. Method for the preparation of a composition according to any of the claims 1 to 37, **characterized in that** it comprises
a first step wherein the molecular complex is mixed in water by mechanical stirring until a liquid mixture is obtained;
a second step wherein the liquid mixture is sprayed on at least part of the fine fraction of the mineral carrier, until the molecular complex penetrates into the porous structure of the particles of the mineral carrier and a solid mixture is obtained;
a third step wherein the mixture is homogenized in a rotary drum;
and a fourth step wherein the homogenized mixture coming from step three is dry mixed with the rest of the mineral carrier.

39. Method according to claim 38, **characterized in that** in step one 1 to 10 parts by weight of the molecular complex are mixed with 99 to 90 parts of water.

40. Method according to claim 38, **characterized in that** in step two the mixture coming from step one is mixed only with a fine fraction of the mineral carrier and **in that** at the end of step four, the fine fraction is dry mixed with the rest of the fractions of the mineral carrier.

41. Method according to claim 40, **characterized in that** 1 part of the fine fraction is mixed with 2 to 6 parts of the rest of the fractions of the carrier.

42. Method according to claim 41, **characterized in that** 1 part of the fine fraction is mixed with 4 parts of the rest of the fractions of the carrier.

43. Use of a composition according to any of the claims 1 to 37, wherein the bottom of a tray is covered with a layer of the composition with an average thickness between 0.5 and 6 cm.

## Patentansprüche

1. Absorbierende Zusammensetzung, die die Entwicklung von unangenehmen Gerüchen in Tierstreu verhindert, umfassend einen desodorierenden Molekularkomplex und einen granularen Träger, **dadurch gekennzeichnet, dass** der Molekularkomplex wenigstens eine Verbindung ist, mit hemmender Wirkung bezüglich der Bildung von schlechten Gerüchen, die aus der bakteriellen Zersetzung von Felinin stammen; der Träger sepiolit mit einer höheren Porosität als 0,1 cm³/g und einer spezifischen Oberfläche von mehr als 50 m²/g; der Molekularkomplex im Inneren der Granulate des Trägers absorbiert ist.

2. Zusammensetzung nach Anspruch 1, **dadurch gekennzeichnet, dass** der Molekularkomplex in der Zusammensetzung in einer Konzentration von 0,02 bis 2 % des Gesamtgewichtes der Zusammensetzung vorhanden ist.

3. Zusammensetzung nach Anspruch 1 oder 2, **dadurch gekennzeichnet, dass** der Molekularkomplex wenigstens eine Verbindung enthält, gewählt unter der Gruppe der Inhibitoren von schlechten, aus der bakteriellen Zersetzung von Felinin stammenden Gerüchen, welche wenigstens eine Verbindung umtassen, gewählt unter aromatischen Aminen, aliphatischen Ketonen, aliphatischen Estern, aromatischen Lactonen, Phenolen, aromatischen Estern und stickstoffhaltigen Verbindungen vom Amintyp, mit einem Dampfdruck (vapor tension) entsprechend 1 Pa bei 25°C oder weniger als 4 Pa bei 25°C, und von Aldehyden oder Mischungen dieser.

4. Zusammensetzung nach Anspruch 3, **dadurch gekennzeichnet, dass** sie wenigstens eine stickstoffhaltige Verbindung vom Amintyp enthält, gewählt unter Indol und Verbindungen aus Reaktionen mit Hydroxycitronellal genannten Indolen, aliphatischen Nitrilen.

5. Zusammensetzung nach Anspruch 4, **dadurch gekennzeichnet, dass** die stickstoffhaltige Verbindung Tridicen-2-nitril ist.

6. Zusammensetzung nach Anspruch 3, **dadurch gekennzeichnet, dass** sie wenigstens einen aromatischen Ether enthält, gewählt aus Diphenyloxid, methylierten und ethylierten Naphtolethern und Galaxolid.

7. Zusammensetzung nach Anspruch 3, **dadurch gekennzeichnet, dass** sie wenigstens ein Phenol enthält, gewählt aus Eugenol und Isoeugenol.<-li>

8. Zusammensetzung nach Anspruch 3, **dadurch gekennzeichnet, dass** sie wenigstens ein aromtisches Lacton enthält, gewählt aus Cumarin und Dihydrocumarin.

9. Zusammensetzung nach Anspruch 3, **dadurch gekennzeichnet, dass** sie wenigstens ein aliphatisches Lacton enthält, gewählt aus Gamma-Decalacton, Dodecalacton und Undecalacton.

10. Zusammensetzung nach Anspruch 3, **dadurch gekennzeichnet, dass** sie wenigstens einen aliphatisches Ester enthält, gewählt aus C₆ bis C₁₅ Estern.

11. Zusammensetzung nach Anspruch 10, **dadurch gekennzeichnet, dass** der aliphatische Ester aus der Gruppe gewählt ist, bestehend aus Methyldihydro-Jasmonat, Methyl-Jasmonat, Methyl-Cyanamat und Ethyl-Methylphenylglyzidat oder Mischungen dieser,

12. Zusammensetzung nach Anspruch 10, **dadurch gekennzeichnet, dass** der aliphatische Ester aus aromatischen Estern gewählt wird.

13. Zusammensetzung nach Anspruch 12, **dadurch gekennzeichnet, dass** der aromatische Ester aus der Gruppe gewählt wird, betstehend aus Methyl-anthranilat, Methyl N-Methyl anthranilat, P-Cresylphenylazetat und Amylsalicylat.

14. Zusammensetzung nach Anspruch 3, **dadurch gekennzeichnet, dass** sie wenigstens einen C₁₃-C₁₄ Keton enthält.

15. Zusammensetzung nach Anspruch 14, **dadurch gekennzeichnet, dass** das C₁₃-C₁₄ Keton aus der Gruppe gewählt ist, bestehend aus den Alpha- und Beta-Inonomen und Damaskonen.

16. Zusammensetzung nach Anspruch 3, **dadurch gekennzeichnet, dass** sie wenigstens ein Keton enthält, gewählt aus der Gruppe bestehend aus aliphatischen und aromatischen Ketonen mit einem moschusartigen Geruch mit bis zu 18 Kohlenstoffatomen, oder Mischungen dieser.

17. Zusammensetzung nach Anspruch 3, **dadurch gekennzeichnet, dass** sie wenigstens einen aliphatischene C₁₀ bis C₁₂ Alkohol enthält.

18. Zusammensetzung nach Anspruch 17, **dadurch gekennzeichnet, dass** der aliphatische Alkohol aus der Gruppe gewählt ist, bestehend aus Decanol, Citronellol und Geraniol.

19. Zusammensetzung nach Anspruch 3, **dadurch gekennzeichnet, dass** sie wenigstens ein C₁₀ bis C₁₃ Aldehyd enthält.

20. Zusammensetzung nach Anspruch 3, **dadurch gekennzeichnet, dass** sie wenigstens ein aliphatisches Aldehyd enthält.

21. Zusammensetzung nach Anspruch 20, **dadurch gekennzeichnet, dass** das aliphatische Aldehyd aus der Gruppe gewählt ist, bestehend aus normalen oder verzweigten Dodecanal und Myrac-Aldehyd.

22. Zusammensetzung nach Anspruch 3, **dadurch gekennzeichnet, dass** sie wenigstens ein aromatisches Aldehyd enthält.

23. Zusammensetzung nach Anspruch 22, **dadurch gekennzeichnet, dass** das aromatische Aldehyd aus der Gruppe gewählt ist, bestehend aus Zyklamen-Aldehyd, Helional-Heliotrophin, Parametylphenylacetaldehyd, Vanillin und Derivate diese.

24. Zusammensetzung nach Anspruch 3, **dadurch gekennzeichnet, dass** sie ein erstes Aldehyd enthält, gewählt aus der Gruppe bestehend aus aliphatischen, azyklischen Aldehyden, die nicht Terpen sind, alizylkischen Aldehyden, die nicht Terpen sind, aliphatischen Aldehyden substituiert durch eine aromatische Gruppe, bifunktionale Aldehyde und ein zweites Aldehyd, gewählt aus der Gruppe bestehend aus Aldehyden mit einem ungesättigten Alphazustand der Aldehydfunktion konjungiert mit einem aromatischen Zyklus und Aldehyden, bei welchen die Funktion durch einen aromatischen Zyklus ausführbar ist.

25. Zusammensetzung nach Anspruch 24, **dadurch gekennzeichnet, dass** das erste Aldehyd unter Helional und Citronellal gewählt wird.

26. Zusammensetzung nach Anspruch 24, **dadurch gekennzeichnet, dass** das zweite Aldehyd zwischen Citral und Jasmonal ausgewählt ist.

27. Zusammensetzung nach Anspruch 24, **dadurch gekennzeichnet, dass** das erste Aldehyd Helional und das zweite Aldehyd Citral ist.

28. Zusammensetzung nach Anspruch 24, **dadurch gekennzeichnet, dass** das erste Aldehyd Helional und das zweite Aldehyd Jasmonal ist.

29. Zusammensetzung nach Anspruch 24, **dadurch gekennzeichnet, dass** das erste Aldehyd Citral und das zweite Aldehyd Jasmonal ist.

30. Zusammensetzung nach einem der Ansprüche 24 oder 27 29, **dadurch gekennzeichnet, dass** das Verhältnis zwischen dem ersten Aldehyd und dem zweiten Aldehyd 20:80 bis zu 80:20 bezüglich des Gewichtes beträgt.

31. Zusammensetzung nach Anspruch 30, **dadurch gekennzeichnet, dass** das Verhältnis zwischen dem ersten Aldehyd und dem zweiten Aldehyd 50:50 bezüglich des Gewichtes beträgt.

32. Zusammensetzung nach einem der Ansprüche 1, 4, **dadurch gekennzeichnet, dass** der mineralische Träger Körnchen mit einer Teilchengröße zwischen 0,1 und 6 mm umfasst.

33. Zusammensetzung nach Anspruch 32, **dadurch gekennzeichnet, dass** die Teilchengröße zwischen 0,6 bis 3,35 mm liegt.

34. Zusammensetzung nach Anspruch 32, **dadurch gekennzeichnet, dass** das Sepiolit eine granulometrische Verteilung zwischen 6 und 60 mesh ASTM aufweist und eine scheinbare Dichte zwischen 400 und 1.000 kg/m³.

35. Zusammensetzung nach einem der Ansprüche 1-3, **dadurch gekennzeichnet, dass** der Molekularkomplex im wesentlichen in einem feinen Teil des mineralischen Trägers integriert ist.

36. Zusammensetzung nach einem der Ansprüche 1, 1, **dadurch gekennzeichnet, dass** der Mineralträger eine größere spezifische Oberfläche als 100 m²/g aufweist.

37. Zusammensetzung nach Anspruch 36, **dadurch gekennzeichnet, dass** der mineralische Träger eine größere spezifische Oberfläche als 200 m²/g aufweist.

38. Verfahren zur Herstellung einer Zusammensetzung gemäß einem der Ansprüche 1 bis 37, **dadurch gekennzeichnet, dass** sie umfasst:
einen ersten Schritt, wobei der Molekularkomplex in Wasser durch mechanisches Rühren gemischt wird, bis eine flüssige Mischung erhalten wird;
einen zweiten Schritt, wobei die flüssige Mischung auf wenigstens einen Teil eines feinen Anteils des mineralischen Trägers aufgesprüht wird, bis das Molekularkomplex in die poröse Struktur der Teilchen des mineralischen Trägers eindringt und eine feste Mischung erhalten wird;
einen dritten Schritt, wobei die Mischung in einer rotierenden Trommel homogenisiert wird;
und einen vierten Schritt, wobei die homogenisierte Mischung aus Schritt 3 mit dem Rest des mineralischen Trägers trocken-gemischt wird.

39. Verfahren nach Anspruch 38, **dadurch gekennzeichnet, dass** in Schritt Eins 1 bis 10 Gew.-Teile des Molekularkomplexes mit 99 bis 90 Gew. Teilen Wasser vermischt werden.

40. Verfahren nach Anspruch 38, **dadurch gekennzeichnet, dass** in Schritt Zwei die Mischung aus Schritt Eins nur mit einem feinen Anteil des mineralischen Trägers vermischt wird und dass an dem Ende des Schrittes Vier der feine Anteil mit dem Rest der Anteile des mineralischen Trägers trocken vermischt wird.

41. Verfahren nach Anspruch 38, **dadurch gekennzeichnet, dass** ein Teil der feinen Fraktion mit 2 bis 6 Teilen des Rests der Fraktionen des Trägers gemischt wird.

42. Verfahren nach Anspruch 40, **dadurch gekennzeichnet, dass** ein Teil der feinen Fraktion mit vier Teilen des Restes der Fraktionen des Trägers gemischt wird.

43. Verwendung einer Zusammensetzung gemäß einem der Ansprüche 1 bis 40, wobei der Boden eines Tabletts mit einer Schicht, der Zusamniensetzung mit einer mittleren Dicke zwischen 0,5 und 6 cm bedeckt wird.

## Revendications

1. Composition absorbante empêchant la formation des mauvaises odeurs dans une litière pour animaux, qui comprend un complexe moléculaire désodorisant et un support granulaire, **caractérisé en ce que**
le complexe moléculaire est au moins un composé ayant des propriétés d'inhibition de la formation des mauvaises odeurs résultant de la décomposition bactérienne de la félinine;
le support est sépiolite avec une porosité supérieure à 0,1 cm³/g et une surface spécifique supérieure à 50 m²/g;
le complexe moléculaire est absorbé à l'intérieur des granulés du support.

2. Composition selon la revendication 1, **caractérisée en ce que** le complexe moléculaire est présent dans la composition en une concentration de 0,02 à 2% du poids total de la compostition.

3. Composition selon la revendication 1 ou 2, **caractérisée en ce que** le complexe moléculaire contient au moins un composé choisi dans le groupe des inhibiteurs des mauvaises odeurs résultant de la décomposition bactérienne de la félinine, qui comprend au moins un composé choisi parmi les amines aromatiques, les cétones aliphatiques, les esters aliphatiques, les lactone aromatiques, les phénols, les éthers aromatiques et les composés azotés de type amine, avec une tension de vapeur inférieur ou égale à 4 Pa à 25 ° C, et parmis les aldéhydes ou leurs mélanges.

4. Composition selon la revendication 3, **caractérisée en ce qu'**elle contient au moins un composé azoté de type amine choisi parmi l'indole et les composés de la réaction avec l'hydroxycitronelle appelés indolène, les nitriles aliphatiques.

5. Composé selon la revendication 4, **caractérisée en ce que** le composé azoté est tridicène-2-nitrile.

6. Composé selon la revendication 3, **caractérisée en ce qu'**elle contient au moins un éther aromatique choisi parmi l'oxyde de diphényle, les éthers méthylés et éthylés du naphtol et le galaxolide.

7. Composition selon la revendication 3, **caractérisée en ce qu'**elle contient au moins un phénol choisi parmi l'eugénol et l'isoeugénol.

8. Composition selon la revendication 3, **caractérisée en ce qu'**elle contient au moins une lactone aromatique choisie entre la coumarine et la dihydrocoumarine.

9. Composition selon la revendication 3, **caractérisée en ce qu'**elle contient au moins une lactone aliphatique choisie parmi la gamma-décalactone, la dodécalactone et l'undécalactone.

10. Composition selon la revendication 3, **caractérisée en ce qu'**elle contient au moins un ester aliphatique choisi parmi les esters en C₈ à C₁₅.

11. Composition selon la revendication 10, **caractérisée en ce que** l'ester aliphatique est choisi dans le groupe comprenant le dihydro-jasmonate de méthyle, le jasmonate de méthyle, le cyanamate de méthyle et le méthylphénylglycidate d'éthyle ou leurs mélanges.

12. Composition selon la revendication 10, **caractérisée en ce que** l'ester aliphatique est choisi parmi les esters aromatiques.

13. Composition selon la revendication 12, **caractérisée en ce que** l'ester aromatique est choisi dand le groupe comprenant l'anthranilate de méthyle, le N-méthylanthranilate de méthyle, N-méthylanthranilate, l'acétate de phényle de p-crésyle et le salicylate d'amyle.

14. Composition selon la revendication 3, **caractérisée en ce qu'**elle contient au moins une cétone en C₁₃-C₁₄.

15. Composition selon la revendication 14, **caractérisée en ce que** la cétone en C₁₃-C₁₄ est choisie dans le groupe comprenant les l'alpha- et bêta- ionones et damascones,

16. Composition selon la revendication 3, **caractérisée en ce qu'**elle contient au moins une cétone choisie parmi le groupe comprenant les cétones aliphatiques et aromatiques à odeur semblable au musc, à jusqu'à 18 atomes de carbone, ou leurs mélanges.

17. Composition selon la revendication 3, **caractérisée en ce qu'**elle contient au moins un alcool aliphatique en C₁₀ à C₁₂.

18. Composition selon la revendication 17, **caractérisée en ce que** l'alcool aliphatique est choisi dans le groupe comprenant le décanol, le citronellol et le géraniol,

19. Composition selon la revendication 3, **caractérisée en ce qu'**elle contient au moins un aldéhyde en C₁₀ à C₁₃.

20. Composition selon la revendication 3, **caractérisé en ce qu'**elle contient au moins un aldéhyde aliphatique.

21. Composition selon la revendication 20, **caractérisée en ce que** l'aldéhyde aliphatique est choisi dans le groupe comprenant le dodécanal et le myracaldéhyde normal ou ramifiée.

22. Composition selon la revendication 3, **caractérisée en ce qu'**elle contient au moins un aldéhyde aromatique.

23. Compositon selon la revendication 22, **caractérisée en ce que** l'aldéhyde aromatique est choisi dans le groupe comprenant l'aldéhyde cyclamen, l'hélional, l'héliotropine, le paraméthylphénylacétaldéhyde, la vanilline et leurs dérivés.

24. Composition selon la revendication 3, **caractérisée en ce qu'**elle contient un premier aldéhyde choisi dans le groupe comprenant les aldéhydes aliphatiques, acycliques et non-terpéniques, les aldéhydes alicycliques non terpéniques, les aldéhydes terpéniques, les aldéhydes aliphatique substitués par un groupe aromatique, les aldéhydes bifonctionnels et un second aldéhyde choisi dans le groupe comprenant les aldéhydes qui comportent une insaturation en alpha de la fonction aldéhydique conjuguée à un cycle aromatique et les aldéhydes dans lesquels la fonction est portée par un cycle aromatique.

25. Composition selon la revendication 24, **caractérisée en ce que** le premier aldéhyde est choisi parmi l'hélional et la citronnelle.

26. Composition selon la revendication 24, **caractérisé en ce que** le second aldéhyde est choisi entre citral et jasmonal.

27. Composition selon la revendication 24, **caractérisée en ce que** le premier aldéhyde est de l'hélional et le second aldéhyde est du citral.

28. Composition selon la revendication 24, **caractérisée en ce que** le premier aldéhyde est de l'hélional et le second aldéhyde est du jasmonal.

29. Composition selon la revendication 24, **caractérisée en ce que** le premier aldéhyde est du citral et le second aldéhyde est du jasmonal.

30. Composition selon l'une quelconque des revendications 24 ou 27-29, **caractérisée en ce que** le rapport entre le premier aldéhyde et le second aldéhyde est de 20/80 jusqu'à 80/20 en poids.

31. Composition selon la revendication 30, **caractérisée en ce que** le rapport entre le premier aldéhyde et le second aldéhyde est de 50/50 en poids.

32. Composition selon l'une quelconque des revendications 1 ou 4, **caractérisée en ce que** le support minéral comprend des granulés d'une taille de particules comprise entre 0,1 et 6 mm.

33. Composition selon la revendication 32, **caractérisée en ce que** la taille des particules est de 0,6 à 3,35 mm.

34. Composition selon la revendication 32, **caractérisée en ce que** la sépiolite a une répartition granulométrique comprise entre maille ASTM 6 et 60 et une masse volumique apparente comprise entre 400 et 1000 kg/m³.

35. Composition selon l'une quelconque des revendications 1-3, **caractérsiée en ce que** le complexe moléculaire est essentiellement intégré dans une fine fraction du support minéral.

36. Composition selon l'une quelconque des revendications 1 ou 4, **caractérisée en ce que** le support minéral a une surface spécifique plus grande que 100 m²/g.

37. Composition selon la revendication 36, **caractérisée en ce que** le support minéral a une surface spécifique plus grande que 200 m²/g.

38. Procédé de préparation d'une composition selon l'une quelconque des revendications 1 à 37, **caractérisée en ce qu'**il comprend
une première étape dans laquelle le complexe moléculaire est mélangé dans de l'eau par agitation mécanique jusqu'à l'obtention d'un mélange liquide;
une deuxième étape dans laquelle le mélange liquide est vaporisé sur au moins une partie de la fine traction du support minéral jusqu'à ce que le complexe moléculaire pénètre dans la structure poreuse des particules du support minéral et qu'un mélange solide soit obtenu;
une troisième étape dans laquelle le mélange est homogénéisé dans un tambour rotatif;
et une quatrième étape dans laquelle le mélange homogénéisé, obtenu à la troisième étape, est mélangé sec avec le reste du support minéral.

39. Procédé selon la revendication 38, **caractérisé en ce que** dans la première étape, de 1 à 10 parties en poids du complexe moléculaire sont mélangées avec de 99 à 90 parties d'eau.

40. Procédé selon la revendication 38, **caractérisé en ce que**, dans la deuxième étape, le mélange obtenu à la première étape est mélangé uniquement avec une fine fraction du support minéral et **en ce que**, à la fin de la quatrième étape, la fine fraction est mélangée sèche avec le reste des tractions du support minéral.

41. Procédé selon la revendication 40, **caractérisé en ce que** 1 partie de la fine fraction est mélangée avec de 2 à 6 parties du reste des fractions du support.

42. Procédé selon la revendication 41, **caractérisé en ce que** 1 partie de la fine fraction est mélangée avec 4 parties du reste des fractions du support.

43. Utilisation d'une composition selon l'une quelconque des revendications 1 à 37, dans laquelle on recouvre le fond d'un bac d'une couche de la composition d'une épaisseur moyenne comprise entre 0,5 et 6 cm.
